# EUROPEAN PATENT APPLICATION

(11) **EP 4 572 231 A1**
(43) Date of publication of application: **18.06.2025**
(21) Application number: 23216885.6
(22) Date of filing: 14.12.2023
(51) Int. Cl.: H04L 9/40, H04L 61/4511

(54) **CYBERSECURITY BASED ON DOMAIN NAME SYSTEM PROTOCOL PROCESSING**

(71) Applicant: Cujo LLC, Covina, CA 91723 (US)
(72) Inventor: Savin, Filip, 07152 Vilnius (LT); Marozas, Leonardas, 07152 Vilnius (LT)
(74) Representative: Marks & Clerk LLP

(57) **Abstract**

In response to intercepting (106), by a customer-premises equipment, CPE, a connection request from a connected device to an external encrypted domain name system, DNS, server, blocking (108), by the CPE, the connection request to cause the connected device to fall back to a use of an unencrypted DNS. And, in response to intercepting (110), by the CPE, an unencrypted DNS query from the connected device, performing (124), by the CPE, a cybersecurity operation related to the unencrypted DNS query.

## Description

### FIELD

The invention relates to a method, apparatus, computer program product, and computer-readable medium.

### BACKGROUND

Connected devices use websites for various operations, such as browsing webpages of a website, uploading sensor data to the website, or downloading a software update from the website. Each target website is specified by a fully qualified domain name (FQDN). The FQDN specifies the exact location of the website in the tree hierarchy of the domain name system (DNS). A common technique used in the cybersecurity is to capture DNS traffic from the connected device to obtain the FQDN of the target website being accessed. Increased user privacy may complicate the reputation check: the FQDN of the website may be encrypted in the DNS traffic, which prevents the interception of the FQDN, and therefore the reputation check of the target website becomes impossible.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A and FIG. 1B are flowcharts illustrating examples of a method;
FIG. 2 is a block diagram illustrating an example implementation environment for the method;
FIG. 3 is a sequence chart illustrating example communication between various actors of the method;
FIG. 4A and FIG. 4B are block diagrams illustrating examples of a cybersecurity apparatus;
FIG. 5 is a block diagram illustrating an example of a connected device;
FIG. 6 is a block diagram illustrating an example of a computing resource; and
FIG. 7A and FIG. 7B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The filtering of the FQDNs that clients try to access may be achieved in two ways: with packet inspection using a server name indication (SNI) from the transport layer security (TLS) protocol or a host header from the hypertext transfer protocol (HTTP), or with DNS filtering using FQDNs from client domain name system (DNS) requests. "Filtering" refers to applying classification (security or content category) checks on the FQDN and making an allow or block decision regarding an access to the target website.

Privacy-oriented extension of existing protocols (such as the enhanced client hello (ECH) in TLS1.3) as well as new secure encrypted DNS protocols (the DNS over hypertext transfer protocol secure (DoH) protocol, the DNS over transport layer security (DoT) protocol, and the DNS over QUIC (DoQ) protocol) impact existing network security solutions by hiding the object of the security check and thus making them inefficient. The introduction of the ECH makes the TLS SNI unusable for security checks, leaving the DNS layer for the FQDN filtering. Traditional DNS over port 53 (Do53) is plaintext and may be used for FQDN filtering, but it is vulnerable to man in the middle (MITM) attacks on the network path from the origin to the destination DNS server. Do53 is a traditional unencrypted DNS protocol over TCP or UDP port 53. The family of the secure encrypted DNS protocols was created to increase privacy and eliminate possibility of the MITM attack. The MITM attack enables the attacker to passively eavesdrop, intercept and/or redirect the network traffic along the network path. The use of the secure DNS protocol makes the FQDN filtering possible only on the destination DNS server itself. Creating the secure DNS server that performs security filtering has the following shortcomings:
- no service discovery, currently there are no mechanism for the router to push secure DNS servers to clients as it does with Do53 and DHCP;
- no enforcement, applications that use the secure DNS may ignore system-wide secure DNS settings received from the service discovery;
- private key distribution, if filtering the secure DNS server/proxy is local (e.g., implemented on the home LAN router) then it must contain a certificate and a private key, which creates risk of key leakage and misuse; and
- Do53-only devices, there are plenty of devices that will not support the secure DNS in the near future (e.g., older devices, simple IoT devices) and they will remain vulnerable to the MITM attacks.

The described examples solve the above-mentioned shortcomings by:
- using the existing service discovery, DHCP with Do53;
- enforcing the use of the Do53 server, which performs the filtering;
- not using the TLS, so no certificates or keys are required; and
- making outbound requests using the secure DNS protocol.

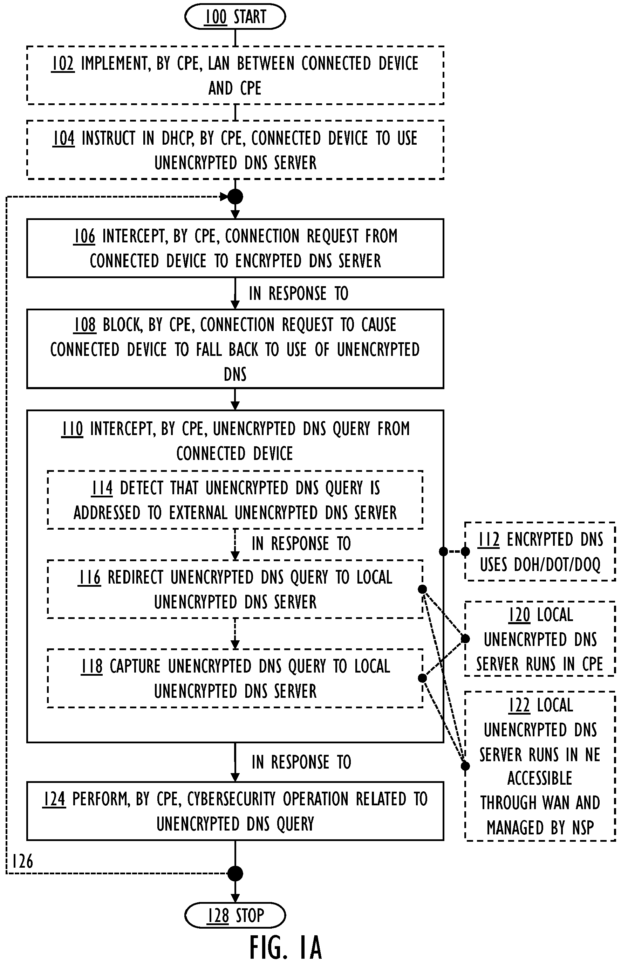

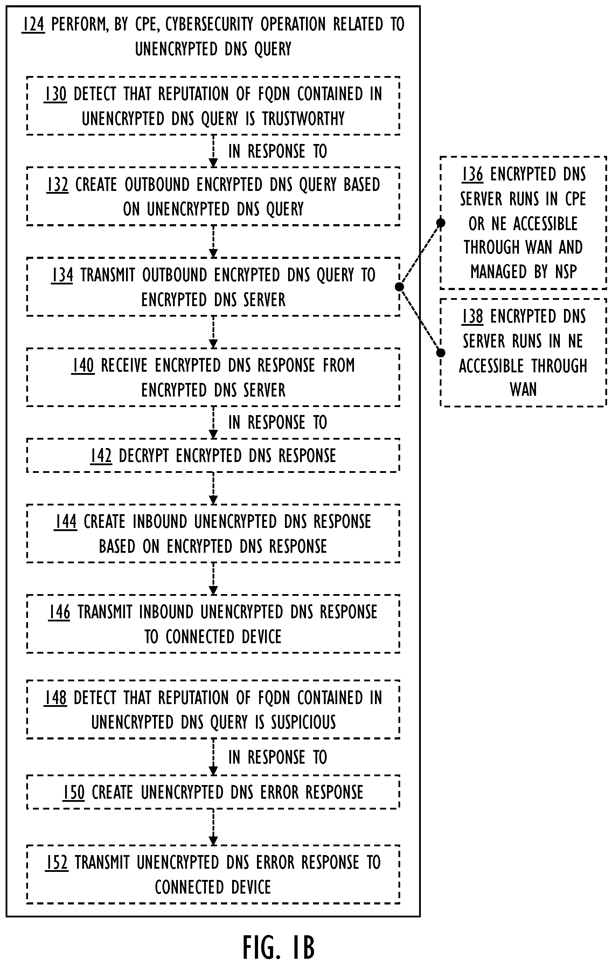

FIG. 1A and FIG. 1B are flowcharts illustrating examples of a method. The method performs operations related to DNS processing.

The method starts in 100 and ends in 128. The method may run in principle endlessly. The infinite running may be achieved by looping 126 back after an operation 124 to an operation 106.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

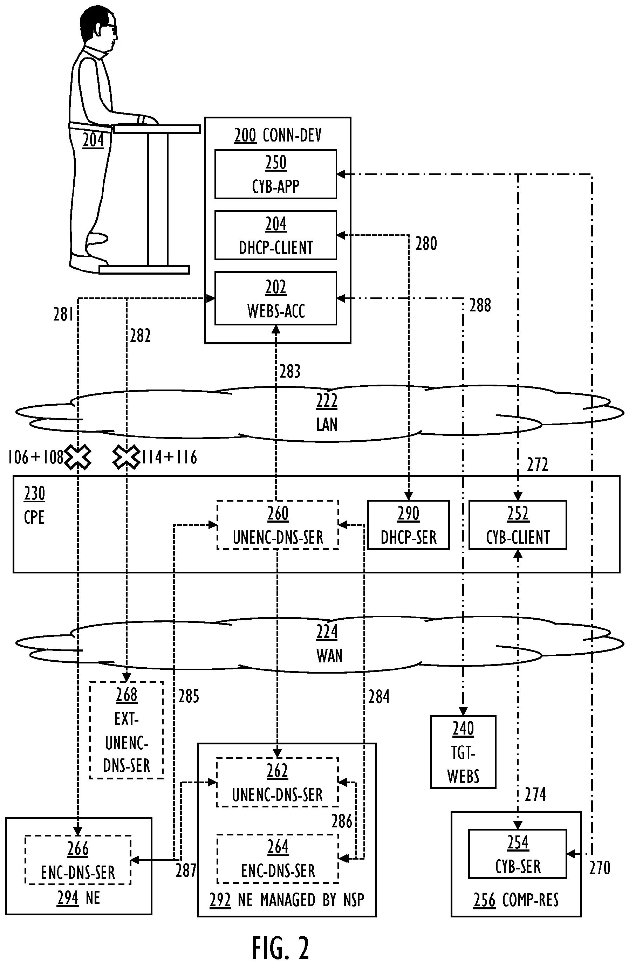

FIG. 2 is a block diagram illustrating an example implementation environment for the method. The method may be a computer-implemented method. The method may operate within a customer-premises equipment 230, but also partly within a computing resource 256.

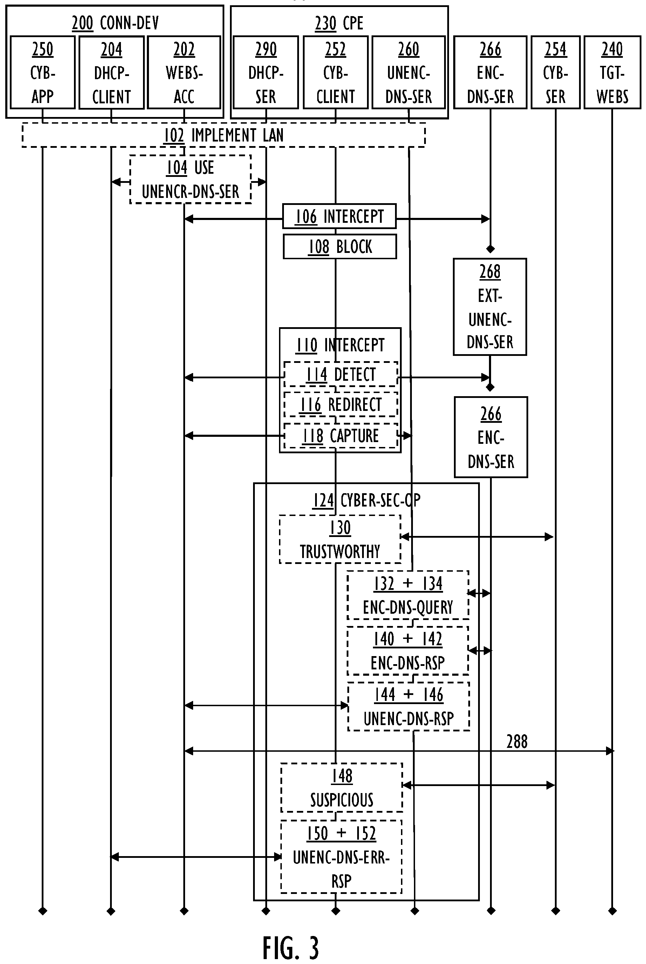

FIG. 3 is a sequence chart illustrating example communication between various actors of the method.

The CPE 230 may implement 102 a local area network (LAN) 222 between a connected device 200 and the CPE 230. The LAN 222 may be a wireless network, which enables a wireless connection between the CPE 230 and the connected device 200. The CPE 230 provides an access to a wide area network (WAN) 224 such as the Internet. In the wireless connection, data packets may be transferred from and to the connected device 200. Additionally, or alternatively, the LAN 222 may be a wired network, such as Ethernet.

As used herein, the term "connected device" 200 refers to a physical device with communication capabilities.

First, the CPE 230 intercepts 106 a connection request 281 from the connected device 200 to an external encrypted DNS server 266. In response to the (first) intercepting 106, the CPE 230 blocks 108 the connection request 281 to cause the connected device 200 to fall back to a use of an unencrypted DNS. The blocking 108 of the connection request 281 may be implemented so that the connection request 281 and/or a reply to it are intercepted and seized so that the use of encrypted DNS for the communication with the external encrypted DNS server 266 is prevented. The fallback refers to a backup option, wherein the unencrypted DNS is reverted to when a primary option of the encrypted DNS fails. In this way, the use of the encrypted DNS directly by the connected device 200 is blocked, and the use of unencrypted DNS directly by the connected device 200 is forced.

Optionally, the CPE 230 instructs 104 in a dynamic host configuration protocol (DHCP) the connected device 200 to use an unencrypted DNS server 260, 262. The DHCP protocol may be processed by a DHCP server 290, which may run on the CPE 230. But still the connected device 200 may attempt to use the external encrypted DNS server 266, which is then blocked 108 to force the use of the unencrypted DNS.

The external encrypted DNS server 266 used the encrypted DNS. The encrypted DNS may use 112 one or more of the following: a DNS over hypertext transfer protocol secure (DoH) protocol, a DNS over transport layer security (DoT) protocol, and a DNS over QUIC (DoQ) protocol. Note that the examples are not limited to these encrypted DNS protocols but may be applied to other encrypted DNS protocols as well. The connection request 281 is then a connection request of the encrypted DNS protocol, such as of the DoH, DoT, or DoQ, and it may be intercepted at various protocol levels, such as HTTP/2, HTTPS, TCP/IP, or UDP/IP, for example.

The DoH protocol performs the remote DNS resolution using the HTTP secure (HTTPS) protocol to encrypt the data. The DoH protocol is being standardized by the Internet Engineering Taskforce (IETF) in RFC 8484. The encrypted DNS query and responses messages using the DoH protocol may use a transmission control protocol (TCP) or user datagram protocol (UDP) port number 443. Note that the examples are not limited to this specific port number but may be applied to other feasible port numbers as well.

Alternatively, the encrypted DNS query and response messages may use the DoT protocol. The DoT protocol encrypts the data using the transport layer security (TLS) protocol. The IETF standard RFC 7858 describes the DoT protocol. The encrypted DNS query and responses messages using the DoT protocol may use a TCP or UDP port number 853. Note that the examples are not limited to this specific port number but may be applied to other feasible port numbers as well.

The unencrypted DNS may use a TCP or UDP port number 53, or a TCP or UDP port number 853. Note that the examples are not limited to these specific port numbers but may be applied to other feasible port numbers as well.

Next, the CPE 230 intercepts 110 an unencrypted DNS query 282, 283 from the connected device 200. In response to the (second) intercepting 110, the CPE 230 performs 124 a cybersecurity operation related to the unencrypted DNS query.

The second intercepting 110 may comprise alternative additional operations.

The CPE 230 may detect 114 that the unencrypted DNS query 282 is addressed to an external unencrypted DNS server 268. In response to the detecting 114, the CPE 230 redirects 116 the unencrypted DNS query to a local unencrypted DNS server 260, 262: as shown in FIG. 2, the unencrypted DNS query 282 to the external unencrypted DNS server 268 is redirected as the unencrypted DNS query 283 to the local unencrypted DNS server 260, 262.

The CPE captures 118 the unencrypted DNS query 283 to the local unencrypted DNS server 260, 262.

The "external" definition for the external unencrypted DNS server 268 refers to the fact that it is beyond the control of the CPE 230, or a network service provider (NSP) supplying and managing the CPE 230.

The "local" definition for the local unencrypted DNS server 260, 262 refers to the fact that it is in the control of the CPE 230, or the NSP supplying and managing the CPE 230. Accordingly, the local unencrypted DNS server 260 is configured to run 120 in the CPE 230. Or alternatively, the local unencrypted DNS server 262 is configured to run 122 in another network element 292, which is accessible from the CPE 230 through the WAN 224, and which is managed by the network service provider of the CPE 230.

The encrypted DNS server 262 is configured to run 136 in the CPE 230, or in the other network element 292, which is accessible from the CPE 230 through the WAN 224 , and which is managed by the NSP of the CPE 230. However, the encrypted DNS server 266 may be configured to run 138 in another network element 294 accessible from the CPE 230 through the WAN 224 (and not being managed by the NSP of the CPE 230).

The performing 124 of the cybersecurity operation related to the unencrypted DNS query 282 may comprise additional operations illustrated in FIG. 1B.

The connected devices 200 (such as user devices or IoT devices) use websites for various operations. A user 204 of the user device 200 may use a browser to browse webpages of a website 240, to view media content provided on the webpages, for example. The IoT device 200 may upload sensor data gathered by one or more sensors onboard the loT device to the website 240, for example. The user device 200 and the IoT device 200 may download a software update from the website 240, for example. Numerous other well-known operations related to the websites 240 may also be performed by the connected device 200. Each target website 240 is specified by the FQDN. The FQDN is a domain name, which specifies the exact location of the website 240 in the tree hierarchy of the DNS. The FQDN is read from right to left:
- the root zone is represented by a full stop (period), which is usually not visible in an address line of the web browser;
- under the root zone is the top level domain (TLD); and
- under these are recursive subdomains (sometimes called a second level subdomain, a third level subdomain, etc.).

For example, the FQDN of the target website may be patent.somehost.exampledomain.com., wherein the root zone is ".", the top level domain is "com", a (second level) subdomain "exampledomain", a (third level) subdomain "somehost" and a (fourth level) subdomain "patent". In this example, the third level subdomain "somehost" may be called a hostname, and the combination of the top level domain and the second level subdomain "exampledomain.com" may be called a domain.

A cybersecurity reputation of the target website 240 may be tied to the FQDN of the target website 240. For example, the reputation may be maintained for the FQDN "somehost.exampledomain.com." including the hostname. Or, in a more general way, the cybersecurity reputation may be maintained for the FQDN "exampledomain.com.", specifying the domain, whereby it defines the reputations for all its subdomains, such as
- "patent.somehost.exampledomain.com.",
- "trademark.somehost.exampledomain.com.",
- "www.exampledomain.com.",
- etc.

The unencrypted DNS proxy server 260, 262 (sometimes also known as a DNS proxy server, a DNS resolver, or a recursive resolver) is a server configured to receive DNS queries from web browsers and other applications). The unencrypted DNS server 260, 262 receives the FQDN, and it is responsible for finding out the corresponding IP address. One FQDN may be mapped to many IP addresses, and, vice versa, one IP address may be mapped to many FQDNs.

For example, the user types the above-mentioned example URL in the address line of the web browser 202 to load the "main"-webpage from the website 240. If a local DNS cache of the unencrypted DNS server 260 has the corresponding IP address, the DNS is resolved immediately. The local DNS cache may be implemented so that DNS records of visited websites 240 are stored (for a duration of a time to live, TTL, value of each DNS record). If the local DNS cache does not contain the needed IP address, an additional DNS resolution query procedure is needed. The additional DNS resolution query procedure may be implemented so that the unencrypted DNS server 260, 262 transmits an additional DNS query message 284, 285, 286, 287 containing the FQDN to an encrypted DNS server 264, 266, which then responds with a DNS response message containing the FQDN and the (resolved) IP address of the website (possibly both IPv4 and IPv6). The unencrypted DNS server 260, 262 may also keep a DNS cache with DNS records of domain names, which a plurality of different connected devices 200 have accessed. If the unencrypted DNS server 260, 262 does not have the needed IP address in the DNS cache, a series of interactive DNS queries encrypted with the encrypted DNS servers 264, 266 is needed so that the unencrypted DNS server 260, 262 may finally respond with a completed DNS response message containing the FQDN and the resolved IP address. In a Linux environment, two tools called netfilter and dnsdist may be used to implement the DNS traffic. The netfilter is a framework, which implements various networking operations (such as packet filtering, network address translation, and port translation) in the form of customized handlers. The dnsdist is a recursive DNS resolver.

The IP address identifies (a network interface of) the host, and a location of the host on the Internet, whereby each IP packet containing an IP address of a source host and an IP address of a destination host, may be routed by a network path from the source host (or the connected device 200) to the destination host (or the accessed target website 240). In this way, the IP address identifies the target website 240 (acting as the host).

In contrast to the FQDN being a text string, the IP address is a numerical label, defined as a 32-bit number (IPv4) or a 128-bit number (IPv6). A human-readable notation of the IPv4 address expresses the address as four consecutive decimal numbers (each representing 8 bits) separated by commas, the IPv4 address therefore ranging from 0.0.0.0 to 255.255.255.255. IPv6 has in the human-readable notation eight consecutive hexadecimal numbers (each hexadecimal number having four digits and representing 16 bits) separated by colons.

The IP address may be a static IP address, meaning that the address does not change, or a dynamic IP address, which is assigned to the host by the network when it connects, meaning that the address changes over time. The dynamic IP address of the connected device 200 may be assigned (and reassigned) by the DHCP server 290, usually for a DHCP lease time (such as 24 hours, a fortnight, etc.).

The (cybersecurity) reputation of the target website 240 may be defined with four categories, for example: malicious, trustworthy, suspicious, or unknown. If the reputation is malicious, an appropriate cybersecurity operation may be to block an access from the connected device 200 to the target website 240. But if the reputation is trustworthy, no cybersecurity operation is needed, and a network traffic from the connected device 200 to the target website 240 is allowed. The reputation may also be suspicious, which may necessitate an appropriate cybersecurity operation such as indicating the suspicious reputation of the website 240 to the user 204 of the connected device 200, and inquiring from the user 204 whether the access to the suspicious website should continue. If the reputation is unknown, the warning and user inquiry may be used, but in addition to this, the cybersecurity system triggers an analysis for determining the reputation for this previously unknown website. As shown in FIG. 2, a cybersecurity client 252 operating on the CPE 230, possibly aided by a cybersecurity server 254, may determine the reputation of the target website 240. The reputation may be retrieved from a cache (in the cybersecurity client 252) or a database (in the cybersecurity server 254), which may be updated continuously by a supervised machine learning algorithm using a training set comprising malicious websites and trustworthy websites, for example.

In response to detecting 130 that a reputation of an FQDN contained in the unencrypted DNS query 282 is trustworthy, an outbound encrypted DNS query is created 132 based on the unencrypted DNS query 282, and the outbound encrypted DNS query is transmitted 134 to the encrypted DNS server 262, 266. In response to receiving 140 an encrypted DNS response from the encrypted DNS server 262, 266, the encrypted DNS response is decrypted 142, an inbound unencrypted DNS response is created 144 based on the encrypted DNS response, and the inbound unencrypted DNS response is transmitted 146 to the connected device 200. This enables the communication from the connected device 200 to the target website 240.

In response to detecting 148 that the reputation of the FQDN contained in the unencrypted DNS query is suspicious, an unencrypted DNS error response with an error code and containing no IP address related to the FQDN is created 150, and the unencrypted DNS error response is transmitted 152 to the connected device 200. This prevents the communication from the connected device 200 to the target website 240.

As described, the use of the unencrypted DNS and encrypted DNS may be combined to enable the interception of the unencrypted DNS in the secure LAN 222, and the avoidance of the MITM attack for the encrypted DNS in the WAN 224, i.e., both privacy and security is achieved. This also enables safe operation for such connected devices 200 that do not support the use of the encrypted DNS. Without the described operations, the use of the unencrypted DNS would both enable the interception for the cybersecurity and the MITM attack to breach the privacy, or the use of the encrypted DNS would prevent both the interception for the cybersecurity and the MITM attack against the security, i.e., either security or privacy is achieved in the prior art, but not both.

In an example, the CPE 230 is configured to generate a wireless non-cellular internet access network 222. The CPE 230 may be configured to operate at a home or an office of a user 204 of the connected device 200. The CPE 230 may also be configured to operate out of the home or the office of the user 204 as a hotspot serving the connected devices 200 in a public place such as a cafe, city center, shopping mall, airport, an arena, etc.

As shown in FIG. 2, the connected device 200 may be configured to execute a website access application 202, such as web user interface application (a web browser, for example), or a stand-alone application (a mobile app, for example), and as a result, data communication is conveyed in the wireless connection 288 from the connected device 200 to an accessed website 240 via the LAN 222 and the WAN 224. The website access application 202 may automatically cause the data communication, or, alternatively, the data communication may be generated as a result of an action by a user 204 through user interface controls of the website access application 202.

The connected device 200 may create the wireless connection 288 using a packet protocol for the website access application 202 of the connected device 200 to the target website 240. The target website 240 may host a server application enabling access by the website access application 202. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the wireless connection 280 (using TCP streams or UDP datagrams, for example). In the Internet Protocol suite, the connection 280 is operated in a link layer, an internet layer, and a transport layer, and the requests transmitted in the wireless connection 280 are operated in an application layer.

The radio signal of the wireless connection 288 may be intercepted 112 by a cybersecurity client 252 operating in the CPE 230. The intercepted radio signal may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected apparatus and its communication) besides the radio frequency fingerprinting to enable the device identification.

As used herein, the term "intercepting" refers to user-approved lawful interception or monitoring of the connection 281, 282, 283, 288, with a purpose and goal of increasing cybersecurity related to the connected device 200 and its operating environment. As the radio signal of the wireless connection 288, for example, is intercepted, the data communication is accessed and collected between the transmitting device and the receiving device. The data communication may be intercepted even if the digital data transmission units (such as messages) in the wireless connection 288 are addressed to the receiving device. The intercepting may be implemented so that the wireless connection 288 is passively monitored, i.e., the wireless connection 288 is not affected by the intercepting. Alternatively, if needed, the intercepting may include a seizing of the wireless connection 288, i.e., the wireless connection 288 is actively influenced so that a connection and/or requests and/or responses are blocked until it may be decided whether a cybersecurity action (such as blocking of the wireless connection 288) is required.

As used herein, the term "data communication" refers to the transmission and/or reception of (digital) data by the connected device 200. The data communication is transferred using digital data transmission units over a communication medium such as one or more communication channels in the wireless connection 288 between the connected device 200 and another network node such as the target website 240. Besides over radio interface, the data communication may be conveyed over another transmission medium (implemented by copper wires, or optical fibers, for example). The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable data communication over the wireless connection 288. The communication protocols may implement a protocol stack with different conceptual protocol layers.

The WAN such as the Internet 224 uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

From the cybersecurity point of view, the Internet services may be divided between legitimate services and fraud services. Legitimate services operate according to moral and ethical standards enforced by law, police, or social pressure. Fraud services do not follow moral and ethical standards, and often perform criminal acts to disclose, steal or damage electronic data, software, or hardware, or disrupt or misdirect services provided by the electronic data, software, and hardware. Fraud services may be fraudulent to the core, i.e., their only reason for existence is to perform malicious acts, but they may also be legitimate services as such, but being infected with malicious software so as to enable criminal acts. Various configurations of the connected device provided with a cybersecurity application 250, the CPE 230 provided with a cybersecurity client 252, and the computing resource 256 provided with a cybersecurity server 254 are used to enforce cybersecurity. As shown in FIG. 2, the cybersecurity application, 250, the cybersecurity client 252, and the cybersecurity server 254 may be communicatively coupled 270, 272, 274 with each other. Note that different service providers, such as network service providers, cloud service operators, and cybersecurity operators, just to name a few, may operate and/or manage the various network nodes shown in FIG. 2.

The CPE 230 is located at home or office of a user 204 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the user 204 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G CPE 230 performs the conversion between the 4G/5G cellular radio network signal and the Wi-Fi^{®} or wired signal.

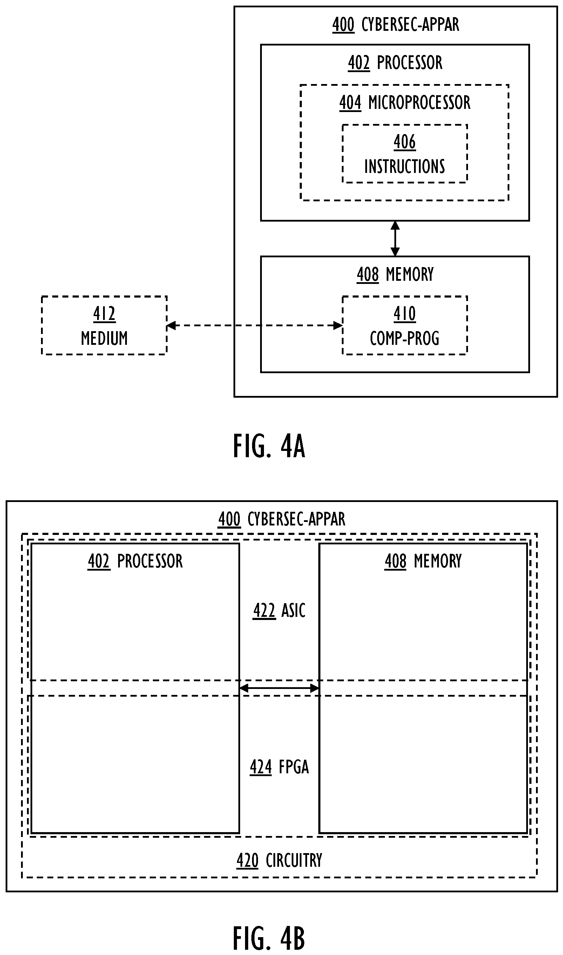

FIG. 4A and FIG. 4B are block diagrams illustrating examples of a cybersecurity apparatus 400. The method described with reference to FIG. 1A and FIG. 1B may be implemented partly by the cybersecurity apparatus 400. The apparatus 400 may execute a part of the operations defined in the method. The apparatus 400 may implement an algorithm, which includes at least the part of the operations of the method, but may optionally include other operations related to the cybersecurity in general. Note that the method described with reference to FIG. 1A and FIG. 1B may be implemented as a part of the cybersecurity client 252 running in the CPE 230 as shown in FIG. 2. As shown in FIG. 2, the cybersecurity apparatus 400 may comprise various distributed actors communicatively coupled 270, 272, 274 with each other.

The apparatus 400 comprises one or more memories 408, and one or more processors 402 coupled to the one or more memories 408 configured to execute the operations 106, 108, 110, 124, for example, described in FIG. 1A.

The term "processor" 402 refers to a device that is capable of processing data. The term "memory" 408 refers to a device that is capable of storing data run-time (= working memory) or permanently (= non-volatile memory).

As shown in FIG. 4A, the one or more processors 402 may be implemented as one or more microprocessors 404, which are configured to execute instructions 406 of a computer program 410 stored on the one or memories 408. The microprocessor 404 implements functions of a central processing unit (CPU) on an integrated circuit. The CPU is a logic machine executing the instructions 406 of the computer program 410. The CPU may comprise a set of registers, an arithmetic logic unit (ALU), and a control unit (CU). The control unit is controlled by a sequence of the instructions 406 transferred to the CPU from the (working) memory 408. The control unit may contain a number of microinstructions for basic operations. The implementation of the microinstructions may vary, depending on the CPU design. The one or more microprocessors 404 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 410 may be written ("coded") by a suitable programming language, and the resulting executable code may be stored in the memory 408 and executed by the one or more microprocessors 404.

The computer program 410 implements the method/algorithm. The computer program 410 may be coded using a programming language, which may be a high-level programming language, such as Go, Java, C, or C++, or with a low-level programming language, such as an assembler or a machine language. The computer program 410 may be in source code form, object code form, executable file, or in some intermediate form, but for use in the one or more microprocessors 404 it is in an executable form as an application. There are many ways to structure the computer program 410: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 410 for performing a wide variety of standard operations. In addition, an operating system (such as a general-purpose operating system) may provide the computer program 510 with system services.

As shown in FIG. 4A, a computer-readable medium 412 may store the computer program 410, which, when executed by the apparatus 400 (the computer program 410 may first be loaded into the one or more microprocessors 404 as the instructions 406 and then executed by one or more microprocessors 404), causes the apparatus 400 (or the one or more microprocessors 404) to carry out the method/algorithm. The computer-readable medium 412 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 410 to the one or memories 408 of the apparatus 400. In some jurisdictions, depending on the legislation and the patent practice, the computer-readable medium 412 may not be the wired or wireless telecommunications signal.

As shown in FIG. 4B, the one or more processors 402 and the one or more memories 408 may be implemented by a circuitry 320. A non-exhaustive list of implementation techniques for the circuitry 420 includes, but is not limited to application-specific integrated circuits (ASIC) 422, field-programmable gate arrays (FPGA) 424, application-specific standard products (ASSP), standard integrated circuits, logic components, and other electronics structures employing custom-made or standard electronic circuits.

Note that in modern computing environments a hybrid implementation employing both the microprocessor technology of FIG. 4A and the custom or standard circuitry of FIG. 4B is feasible.

Functionality of the apparatus 400, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

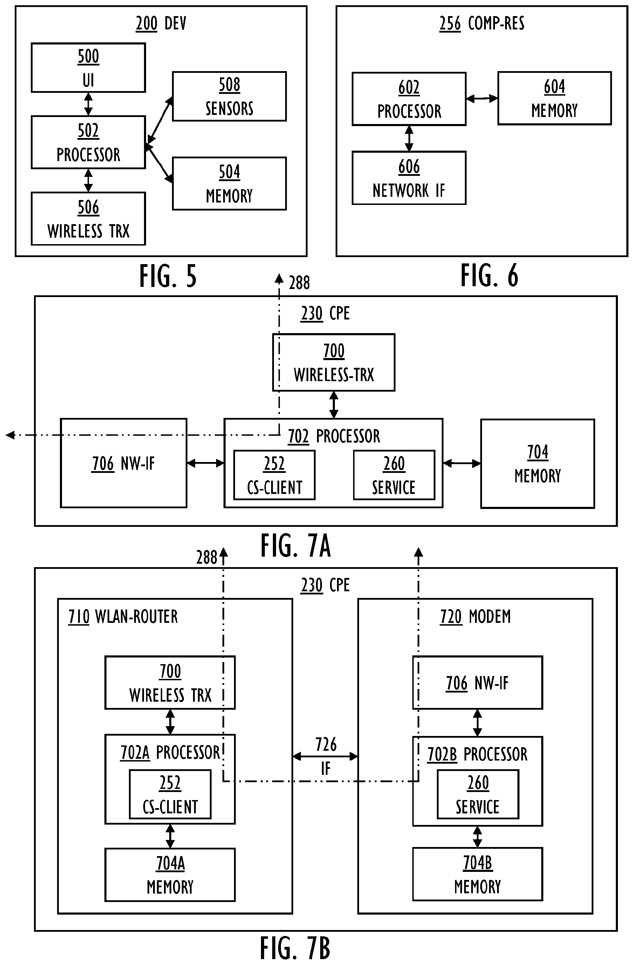

FIG. 5 is a block diagram illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200 may be a personal communication device of the user 204. The connected device 200 may also be an Internet of Things (IoT) device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 504, and one or more processors 502 coupled to the one or more memories 504 configured to carry out a functionality of the connected device 200. In addition, the connected device 200 comprises a user interface 500 (such as a touch screen or one or more LEDs), and one or more wireless transceivers 506 (such as a WLAN transceiver, a cellular radio network transceiver, and a short-range radio transceiver), and also one or more sensors 508. As shown in FIG. 2, the connected device 200 may be running a cybersecurity application 250.

FIG. 6 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 6, the server apparatus 256 comprises one or more memories 604, and one or more processors 602 coupled to the one or more memories 604 configured to carry out the functionality of the cybersecurity server 254. In addition, the server apparatus 256 comprises a network interface (such as an Ethernet network interface card) 606 configured to couple the server apparatus 256 to the Internet 224.

FIG. 7A and FIG. 7B are block diagrams illustrating examples of the CPE 230.

In FIG. 7A, the CPE 230 is an integrated apparatus comprising one or more memories 704, and one or more processors 702 coupled to the one or more memories 704 configured to carry out a part of the method/algorithm in some examples. Additionally, the CPE 230 comprises a wireless radio transceiver 700 configured to create the LAN 222 for enabling access by the connected device 200. The CPE 230 also comprises a network interface 706 to act as a modem configured to connect to the telecommunication circuit of the carrier at the demarcation point, i.e., to the WAN 224. The network interface 706 may operate as a Digital Subscriber Line (DSL) modem using different variants such as Very high bitrate DSL (VDSL), Symmetric DSL (SDSL), or Asymmetric DSL (ADSL). The network interface 706 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The CPE 230 may be running the cybersecurity client 252.

In FIG. 7B, the CPE 230 is a two-part apparatus. A WLAN router part 710 comprises the one or more memories 704A, the one or more processors 702A coupled to the one or more memories 704A configured to carry out the method/algorithm, and the wireless transceiver 700 to create the LAN 222 for enabling access by the connected device 200. A modem part 720 comprises the one or more processors 702B coupled to one or more memories 704B configured to carry out modem operations, and the network interface 706 to act as the modem configured to connect to the WAN 224. The WLAN router part 710 may be purchased by the user 204 of the connected device 200 to gain access to a part of the method/algorithm, whereas the modem part 720 may be provided by a carrier providing the telecommunication circuit access. As shown in FIG. 7B, the WLAN router part 710 and the modem part 720 may be communicatively coupled by an interface 726 (such as a wired Ethernet interface). As shown in FIG. 7B, the platform may be provided by the one or more memories 704A, and the one or more processors 702A, but also additionally, or alternatively, by the one or more memories 704B, and the one or more processors 702B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
in response to intercepting (106), by a customer-premises equipment, CPE, a connection request from a connected device to an external encrypted domain name system, DNS, server, blocking (108), by the CPE, the connection request to cause the connected device to fall back to a use of an unencrypted DNS; and
in response to intercepting (110), by the CPE, an unencrypted DNS query from the connected device, performing (124), by the CPE, a cybersecurity operation related to the unencrypted DNS query.

2. The method of claim 1, wherein intercepting (110), by the CPE, the unencrypted DNS query from the connected device further comprises:
in response to detecting (114) that the unencrypted DNS query is addressed to an external unencrypted DNS server, redirecting (116) the unencrypted DNS query to a local unencrypted DNS server.

3. The method of any preceding claim, wherein intercepting (110), by the CPE, the unencrypted DNS query from the connected device further comprises:
capturing (118) the unencrypted DNS query to a local unencrypted DNS server.

4. The method of claim 2 or 3, wherein the local unencrypted DNS server is configured to run (120) in the CPE.

5. The method of claim 2 or 3, wherein the local unencrypted DNS server is configured to run (122) in another network element, which is accessible from the CPE through a wide area network, WAN, and which is managed by a network service provider of the CPE.

6. The method of any preceding claim, wherein performing (124), by the CPE, the cybersecurity operation related to the unencrypted DNS query further comprises:
in response to detecting (130) that a reputation of a fully qualified domain name, FQDN, contained in the unencrypted DNS query is trustworthy, creating (132) an outbound encrypted DNS query based on the unencrypted DNS query, and transmitting (134) the outbound encrypted DNS query to an encrypted DNS server.

7. The method of claim 6, wherein performing (124), by the CPE, the cybersecurity operation related to the unencrypted DNS query further comprises:
in response to receiving (140) an encrypted DNS response from the encrypted DNS server, decrypting (142) the encrypted DNS response, creating (144) an inbound unencrypted DNS response based on the encrypted DNS response, and transmitting (146) the inbound unencrypted DNS response to the connected device.

8. The method of claim 6 or 7, wherein the encrypted DNS server is configured to run (136) in the CPE, or in another network element, which is accessible from the CPE through a wide area network, WAN, and which is managed by a network service provider of the CPE.

9. The method of claim 6 or 7, wherein the encrypted DNS server is configured to run (138) in another network element accessible from the CPE through a wide area network, WAN.

10. The method of any preceding claim, wherein performing (124), by the CPE, the cybersecurity operation related to the unencrypted DNS query further comprises:
in response to detecting (148) that a reputation of a fully qualified domain name, FQDN, contained in the unencrypted DNS query is suspicious, creating (150) an unencrypted DNS error response with an error code and containing no Internet Protocol, IP, address related to the FQDN, and transmitting (152) the unencrypted DNS error response to the connected device.

11. The method of any preceding claim, further comprising:
implementing (102), by the CPE, a local area network, LAN, between the connected device and the CPE.

12. The method of any preceding claim, further comprising:
instructing (104) in a dynamic host configuration protocol, DHCP, by the CPE, the connected device to use an unencrypted DNS server.

13. The method of any preceding claim, wherein an encrypted DNS of the external encrypted DNS server uses (112) one or more of the following: a DNS over hypertext transfer protocol secure, DoH, protocol, a DNS over transport layer security, DoT, protocol, and a DNS over QUIC, DoQ, protocol.

14. An apparatus comprising means for carrying out the method of any preceding claim 1-13.

15. A computer program product comprising instructions which, when executed by an apparatus, cause the apparatus to carry out the method of any preceding claim 1-13.

16. A computer-readable medium comprising a computer program with instructions which, when executed by an apparatus, cause the apparatus to carry out the method of any preceding claim 1-13.
